# EUROPÄISCHE PATENTSCHRIFT

(11) **EP 2 801 474 B1**
(45) Veröffentlichungstag und Bekanntmachung des Hinweises auf die Patenterteilung: **12.10.2016**
(21) Anmeldenummer: 14156912.9
(22) Anmeldetag: 27.02.2014
(51) Int. Cl.: B29D 30/42, B29C 65/00

(54) **Verfahren zur Herstellung von Fahrzeugreifen**
Method for manufacturing vehicle tyres
Procédé de fabrication de pneus de véhicule

(30) Priorität: 06.05.2013 DE 102013104606
(43) Veröffentlichungstag der Anmeldung: 12.11.2014
(73) Patentinhaber: Continental Reifen Deutschland GmbH, 30165 Hannover (DE)
(72) Erfinder: Reitmann, Sebastian, 31515 Wunstorf (DE); Kneussel, Ewald, 30890 Barsinghausen (DE)
(74) Vertreter: Widjaja, Wira

(56) Entgegenhaltungen:
- DE-A1- 4 404 907
- DE-B- 1 177 813
- US-A- 4 455 189
- US-A1- 2009 032 181

## Beschreibung

Die Erfindung betrifft ein Verfahren zur Herstellung von Fahrzeugreifen.

Bei der Herstellung von Fahrzeugreifen ist bekannt, dass insbesondere die Spulbandage in Form von schmalen Gummistreifen bzw. Materialstreifen auf ein Gürtelpaket, der sich auf einer Reifenaufbautrommel befindet, aufgespult wird.

Ein Nachteil bei den bekannten Verfahren besteht darin, dass die Spulbandage für die Vorbereitung auf einzelne Spulen gewickelt wird, die nur eine begrenzte Kapazität haben. Das hat zur Folge, dass der Spulprozess jedes Mal unterbrochen werden muss, wenn eine Wickelspule mit der Spulbandage leergelaufen ist. Im Normalfall werden die Materialstreifenenden der alten und der neuen Spulbandage von einem Bediener manuell zusammengefügt. Erst nach diesem Zusammensetzen kann der Spulprozess fortgeführt werden. Insb. die damit verbundenen Maschinenstillstandszeiten sind nachteilig.
Die US 2009/032181 A1 offenbart ein bekanntes Herstellungsverfahren, welches bei der Herstellung von Reifen eingesetzt wird.

Der Erfindung lag die Aufgabe zugrunde, ein Verfahren bereitzustellen, mit dem herkömmliche Verfahren zum Aufspulen von Spulbandage bei der Reifenherstellung verbessert werden.

Gelöst wird die Aufgabe durch ein Verfahren mit folgenden Schritten:
a) Kontinuierliches Aufspulen einer ersten Spulbandage zur Herstellung eines Reifenrohlings,
b) Anhalten des Aufspulprozesses und Fixierung der ersten Spulbandage mit einer Materialführung,
c) Trennen der ersten Spulbandage im hinteren Bereich der Materialführung mit einer Schneidvorrichtung,
d) Anordnen des hinteren Materialstreifenendes der ersten Spulbandage in einer Nut der Materialführung,
e) Positionierung der Materialführung mit dem hinteren Materialstreifenende der ersten Spulbandage unterhalb einer Spleisseinheit,
   wobei in der Spleisseinheit das vordere Materialstreifenende einer zweiten Spulbandage bereits eingelegt ist,
f) Verbinden des vorderen Materialstreifenendes der zweiten Spulbandage mit dem hinteren Materialstreifenende der ersten Spulbandage,
   wobei das vordere und das hintere Materialstreifenende in einem vorgegebenen Längenbereich übereinander liegen und eine an der Spleisseinheit angeordnete Spleissrolle über die Spleisslänge die übereinander liegenden Materialstreifenenden abgerollt sowie aneinander drückt wird,
   wobei die über einander liegenden Materialstreifenenden fest miteinander verbunden werden,
g) Zurückverfahren der Spleisseinheit in eine Ausgangsposition,
h) Fortsetzen des Spulprozesses zur Herstellung eines Reifenrohlings mit der zweiten Spulbandage.

Ein Vorteil der Erfindung ist insbesondere darin zu sehen, dass durch das erfindungsgemäße Verfahren die Maschinenstillstandszeiten beim Aufspulprozess wesentlich reduziert werden. Das Zusammensetzen der entsprechenden Materialstreifenenden der Spulbandage erfolgt im Wesentlichen automatisiert. Ein weiterer Vorteil besteht darin, dass die beiden übereinander liegenden Materialstreifenenden der ersten und der zweiten Spulbandage mit der Spleissrolle mit einer hohen Festigkeit verbunden werden. Die Spleissrolle wird mit einem konstanten Anpressdruck über die übereinander liegenden Materialstreifenenden gerollt, so dass die beiden Materialstreifenenden feste zusammen gespleisst werden.

In einer vorteilhaften Weiterbildung der Erfindung ist vorgesehen, dass bei Schritt f) die Spleissrolle auf einer Schlitteneinheit mit einem Schlitten für die Spleissrolle und einer Führung geführt wird.
Dadurch kann ein konstanter Anpressdruck durch die Spleissrolle auf die beiden übereinander liegenden Materialstreifenenden aufgebracht werden. Die Qualität der Spleissverbindung wird dadurch wesentlich verbessert.

In einer weiteren vorteilhaften Weiterbildung der Erfindung ist vorgesehen, dass bei Schritt f) die Spleisslänge der übereinanderliegenden Materialstreifenenden über einen verstellbaren Anschlag eingestellt wird.
Dadurch kann die Spleisslänge unterschiedlichen Materialanforderungen angepasst werden. Beispielsweise können für die Spulbandage unterschiedliche Gummimischungen eingesetzt werden, die unterschiedliche Spleisslängen erforderlich machen.

In einer weiteren vorteilhaften Weiterbildung der Erfindung ist vorgesehen, dass das vordere Materialstreifenende der zweiten Spulbandage in der Spleisseinheit zwischen einer Klemmeinheit und einem Materialhalter eingespannt ist.
Auf diese Weise kann das vordere Materialstreifenende der zweiten Spulbandage mit einer hohen Präzision über das hintere Materialstreifenende der ersten Spulbandage gelegt werden.

In einer weiteren vorteilhaften Weiterbildung der Erfindung ist vorgesehen, dass zwischen dem Materialhalter und dem Anschlag der Spleisseinheit eine federndes Element angeordnet ist, wobei das federnde Element den Materialhalter und den Anschlag auf Abstand hält.
Dadurch lässt sich das Endteil des vorderen Materialstreifenendes aus dem Materialhalter ziehen, wobei das Endteil anschließend mit der darunter angeordneten zweiten Spulbandage fest verbunden wird.

In einer weiteren vorteilhaften Weiterbildung der Erfindung ist vorgesehen, dass der Anschlag entlang der Führung verstellbar ist, wodurch die Spleisslänge variabel einstellbar ist.
Dadurch lässt sich der Anschlag mit einer hohen Genauigkeit verstellen.

In einer weiteren vorteilhaften Weiterbildung der Erfindung ist vorgesehen, dass die Spleisslänge bis zu einer Länge von ca. 100 bis 200 mm variabel einstellbar ist.
Dadurch lässt sich die Spleisseinheit für unterschiedliche Materialanforderungen einsetzen.

In einer weiteren vorteilhaften Weiterbildung der Erfindung ist vorgesehen, dass bei Schritt f) die Spleissrolle über das vordere Materialstreifenende abrollt und gegen den Materialhalter verfahren wird.
Auf diese Weise wird ein kontinuierlich wirkender Anpressdruck auf die beiden übereinander liegenden Materialstreifenenden aufgebracht.

In einer weiteren vorteilhaften Weiterbildung der Erfindung ist vorgesehen, dass bei Schritt f) der Materialhalter mit dem Schlitten für die Spleissrolle gegen den Anschlag der Spleisseinheit geschoben wird, wobei das am Materialhalter eingeklemmte Endteil des vorderen Materialstreifenendes aus dem Materialhalter heraus gezogen und mit dem hinteren Materialstreifenende der ersten Spulbandage verbunden wird. Auf diese Weise wird sichergestellt, dass das Endteil des vorderen Materialstreifenendes der zweiten Spulbandage mit einer hohen Festigkeit mit der ersten Spulbandage verbunden wird.

In einer weiteren vorteilhaften Weiterbildung der Erfindung ist vorgesehen, dass bei Schritt d) ein Niederhalter das hintere Materialstreifenende der ersten Spulbandage in eine Aussparung der Materialführung zurück zieht, wodurch das Endteil des hinteren Materialstreifenendes der ersten Spulbandage in der Nut der Materialführung positioniert wird.

Auf diese Weise wird sichergestellt, dass das Endteil des hinteren Materialstreifenendes der ersten Spulbandage fest mit der darüber liegenenden zweiten Spulbandage verbunden wird.

In einer weiteren vorteilhaften Weiterbildung der Erfindung ist vorgesehen, dass das Anhalten des Aufspulprozesses bei Schritt b) dann erfolgt, wenn im Auswickelbereich der Spule mit der ersten Spulbandage ein Materialende detektiert wird.
Dadurch wird der Automatisierungsgrad beim Zusammensetzen der Materialstreifenenden erhöht.

In einer weiteren vorteilhaften Weiterbildung der Erfindung ist vorgesehen, dass eine Vielzahl von Spleisseinheiten eingesetzt werden, wobei jeder Spleisseinheit eine separate Spule mit einer Spulbande zugeordnet ist,
wobei bei Schritt e) die Materialführung mit dem hinteren Materialstreifenende der ersten Spulbandage jeweils vor eine Spleisseinheit mit einem vorderen Materialstreifenende der zweiten Spulbandage verfahren wird.
Auf diese Weise kann die Materialführung beliebig viele Spleisseinheiten anfahren, so dass die Auswickelstation mit beliebig vielen Materialspeichern bestückt werden kann. Das bedeutet, dass die Aufwickelstation eine Vielzahl von Wickelrollen mit Spulbandagen Material aufweist, die jeweils mit einer entsprechenden Spleisseinheit verbunden ist. Der Bediener hat jetzt nur noch die Aufgabe in bestimmten Zeitintervallen zu kontrollieren, ob leere Spleisseinheiten mit neuen Spulbandagenmaterial zu bestücken sind.

Anhand eines Ausführungsbeispiels soll die Erfindung näher erläutert werden. Es zeigen:

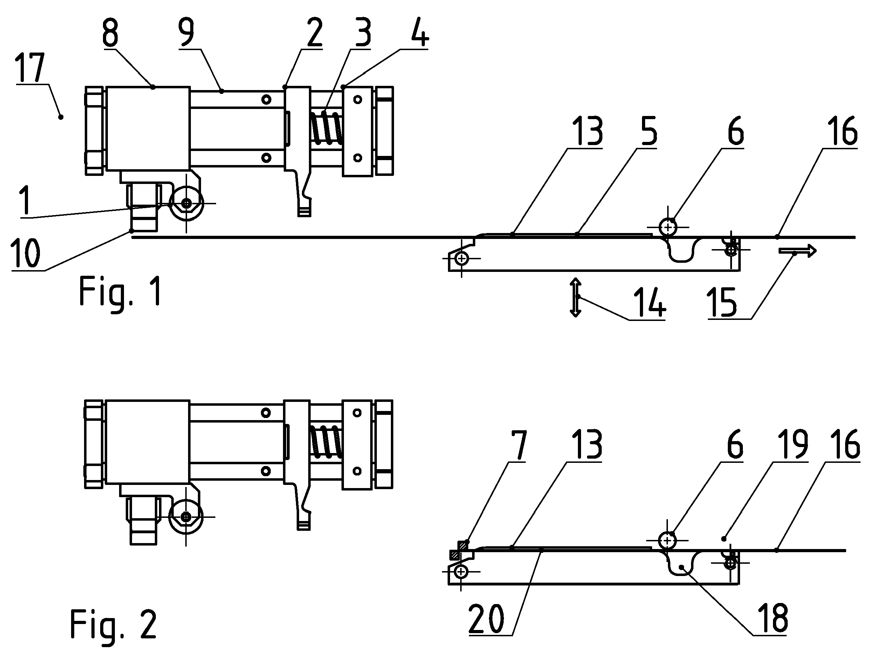

Fig. 1 - 5: ein Ausführungsbeispiel des erfindungsgemäßen Verfahrens.

Die Figur 1 zeigt ein Ausführungsbeispiel des Verfahrens.
Die erste Spulbandage 16 wird bei einem kontinuierlichen Spulprozess in Förderrichtung 15 zur nicht dargestellten Gürteltrommel gefördert. Auf der Gürteltrommel erfolgt das Aufwickeln der Spulbandage über bereits aufgelegte Gürtellagen. Die erste Spulbandage 16 wird kontinuierlich aus einer nicht dargestellten Auswickelstation heraus gefördert, wobei die Spulbandage 16 durch die Materialführung 5 geführt wird. Die Spleisseinheit 17 befindet sich in einer Warteposition. In der dargestellten Form ist sie nicht mit der zweiten Spulbandage bestückt. Die Spleisseinheit 17 umfasst die Spleissrolle 1, die an dem Schlitten 8 angeordnet ist. Unterhalb des Schlittens 8 befindet sich eine Klemmeinheit 10. Der Schlitten 8 wird durch die Führung 9 in horizontaler Richtung geführt. Der Materialhalter 2 ist für die Aufnahme des Endteiles des vorderen Materialstreifenendes der zweiten Spulbandage. Zwischen dem Materialhalter 2 und dem Anschlag 4 ist ein federndes Element 3 angeordnet. Auf der Oberseite der Materialführung 5 ist eine Nut 13 angeordnet. Die Materialführung 5 kann in vertikaler Richtung 14 verfahren werden, um unterschiedliche Spleisseinheiten anzufahren.

Die Fig. 2 zeigt den Vorgang, bei dem das hintere Materialstreifenende 20 mit der Trennvorrichtung 7 getrennt wird. Vorab wurde automatisch detektiert, dass die Wickelrolle mit der ersten Spulbandage kurz vor dem Leerlaufen ist. Das hintere Materialstreifenende 20 der ersten Spulbandage 16 wird mit der Fixierung 19 fixiert, damit die erste Spulbandage 16 unter Spannung gehalten wird.

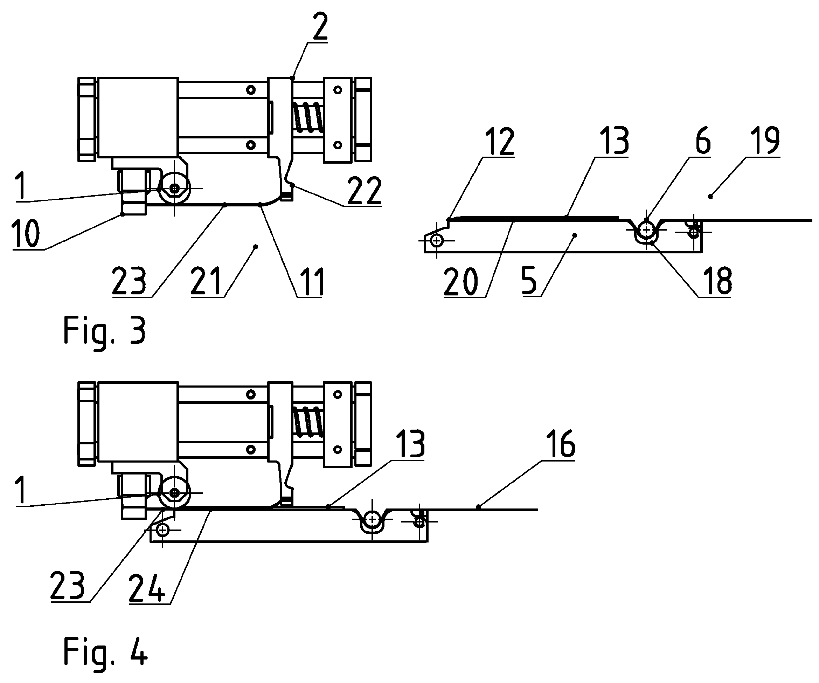

Die Fig. 3 zeigt den Verfahrensschritt, bei dem das hintere Materialstreifenende 20 an der entsprechenden Stelle mit dem Niederhalter 6 in die Aussparung 18 an der Materialführung 5 eingezogen wird. Das Endteil 12 des hinteren Materialstreifenendes 20 wird dadurch in der Nut 13 der Materialführung 5 positioniert. Die Spleisseinheit 17 ist in einem Zustand dargestellt, bei dem das vordere Materialstreifenende 21 der zweiten Spulbandage 23 für den anschließenden Spleissvorgang eingespannt worden ist. In der vorderen Klemmeinheit 22 am Materialhalter 2 ist das vordere Endteil des vorderen Materialstreifenendes der zweiten Spulbandage 23 eingeklemmt. Im hinteren Teil wird die zweite Spulbandage 23 mit der Klemmeinheit 10 auf Spannung gehalten. Die Materialführung 5 wird mit dem hinteren Materialstreifenende 20 unter die Spleisseinheit 17 verfahren.

Die Fig. 4 zeigt den Verfahrensschritt, bei dem das vordere Materialstreifenende der zweiten Spulbandage mit der Spleisseinheit 17 über das hintere Materialstreifenende der ersten Spulbandage 16 angeordnet wurde. Die beiden übereinander liegenden Materialstreifenenden 24 werden anschließend mit der Spleissrolle 1 fest miteinander verbunden.

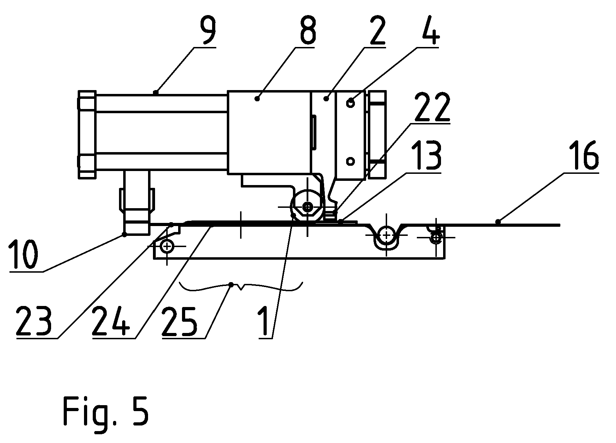

Die Fig. 5 zeigt den Verfahrensschritt, bei dem die Spleissrolle 1 die beiden übereinander liegenden Materialstreifenenden 24 fest miteinander verbunden hat. Bei diesem Vorgang wird der Schlitten 8 gegen den Materialhalter 2 verfahren, so dass beide Bauteile mit dem federnden Element in die dargestellte Endposition gebracht werden. Das Endteil des vorderen Materialstreifenenendes der zweiten Spulbandage wird bei diesem Vorgang aus der vorderen Klemmeinheit 22 herausgezogen, so dass die Spleissrolle 1 das Endteil ebenfalls mit der ersten Spulbandage 16 verbinden kann. Anschließend wird die Fixierung der zweiten Spulbandage mit der Klemmeinheit 10 gelöst. Die Spleisseinheit 17 wird danach in eine Warteposition zurück versetzt, wobei nachfolgend der Aufspulprozess mit der zweiten Spulbandage 23 fortgesetzt werden kann.

### Bezugszeichenliste

### (ist Teil der Beschreibung)

- 1: Spleissrolle
- 2: Materialhalter
- 3: Federndes Element
- 4: Anschlag
- 5: Materialführung für Spulbandage
- 6: Niederhalter
- 7: Schneidvorichtung
- 8: Schlitten für Spleissrolle
- 9: Führung für Schlitten der Spleissrolle
- 10: Klemmeinheit
- 11: Vorderes Endteil des vorderen Materialstreifenendes der zweiten Spulbandage
- 12: Hinteres Endteil des hinteren Materialstreifenendes der ersten Spulbandage
- 13: Nut der Materialführung
- 14: Vertikale Richtung in der die Materialführung bewegt werden kann
- 15: Förderrichtung der ersten Spulbandage zur Gürteltrommel
- 16: Erste Spulbandage
- 17: Spleisseinheit
- 18: Aussparung in der Materialführung
- 19: Fixierung der ersten Spulbandage in der Materialführung
- 20: hinteres Materialstreifenende der ersten Spulbandage
- 21: vorderes Materialstreifenende der zweiten Spulbandage
- 22: vordere Klemmeinheit am Materialhalter
- 23: zweite Spulbandage
- 24: übereinander liegende Materialstreifenenden der ersten und zweiten Spulbandage
- 25: Spleisslänge

## Patentansprüche

1. Verfahren zum automatisierten Zusammensetzen von Materialstreifenenden (20, 21) einer Spulbandage bei der Herstellung von Fahrzeugreifen, mit folgenden Schritten:
a) Kontinuierliches Aufspulen einer ersten Spulbandage (16) zur Herstellung eines Reifenrohlings,
b) Anhalten des Aufspulprozesses und Fixierung der ersten Spulbandage (16) mit einer Materialführung (5),
c) Trennen der ersten Spulbandage (16) im hinteren Bereich der Materialführung (5)mit einer Schneidvorrichtung (7),
d) Anordnen des hinteren Materialstreifenendes (20) der ersten Spulbandage (16) in einer Nut (13) der Materialführung (5),
e) Positionierung der Materialführung (5) mit dem hinteren Materialstreifenende (20) der ersten Spulbandage (16) unterhalb einer Spleisseinheit (17),
wobei in der Spleisseinheit (17) das vordere Materialstreifenende (21) einer zweiten Spulbandage (23) bereits eingelegt ist,
f) Verbinden des vorderen Materialstreifenendes (21) der zweiten Spulbandage (23) mit dem hinteren Materialstreifenende (20) der ersten Spulbandage (16),
wobei das vordere und das hintere Materialstreifenende (20, 21) in einem vorgegebenen Längenbereich übereinander liegen und eine an der Spleisseinheit (17) angeordnete Spleissrolle (1) über die Spleisslänge (25) die übereinander liegenden Materialstreifenenden (24) abgerollt sowie aneinander drückt wird,
wobei die über einander liegenden Materialstreifenenden (20, 21) fest miteinander verbunden werden,
g) Zurückverfahren der Spleisseinheit (17) in eine Ausgangsposition,
h) Fortsetzen des Spulprozesses zur Herstellung eines Reifenrohlings mit der zweiten Spulbandage (23).

2. Verfahren nach Anspruch 1,
**dadurch gekennzeichnet, dass**
bei Schritt f) die Spleissrolle (1) auf einer Schlitteneinheit mit einem Schlitten (8) für die Spleissrolle (1) und einer Führung (9) geführt wird.

3. Verfahren nach einem der vorhergehenden Ansprüche,
**dadurch gekennzeichnet, dass**
bei Schritt f) die Spleisslänge (25) der übereinanderliegenden Materialstreifenenden (24) über einen verstellbaren Anschlag (4) eingestellt wird.

4. Verfahren nach einem der vorhergehenden Ansprüche,
**dadurch gekennzeichnet, dass**
das vordere Materialstreifenende (21) der zweiten Spulbandage (23) in der Spleisseinheit (17) zwischen einer Klemmeinheit (10) und einem Materialhalter (2) eingespannt ist.

5. Verfahren nach einem der vorhergehenden Ansprüche,
**dadurch gekennzeichnet, dass**
zwischen dem Materialhalter (2) und dem Anschlag (4) der Spleisseinheit (17) eine federndes Element (3) angeordnet ist,
wobei das federnde Element (3) den Materialhalter (2) und den Anschlag (4) auf Abstand hält.

6. Verfahren nach einem der vorhergehenden Ansprüche,
**dadurch gekennzeichnet, dass**
der Anschlag (4) entlang der Führung (9) verstellbar ist, wodurch die Spleisslänge (25) variabel einstellbar ist.

7. Verfahren nach einem der vorhergehenden Ansprüche,
**dadurch gekennzeichnet, dass**
die Spleisslänge (25) bis zu einer Länge von ca. 100 bis 200 mm variabel einstellbar ist.

8. nacheinander Verfahren nach einem der vorhergehenden Ansprüche 4-7,
**dadurch gekennzeichnet, dass**
bei Schritt f) die Spleissrolle (1) über das vordere Materialstreifenende (21) abrollt und gegen den Materialhalter (2) verfahren wird.

9. Verfahren nach einem der vorhergehenden Ansprüche 4-8,
**dadurch gekennzeichnet, dass**
bei Schritt f) der Materialhalter mit dem Schlitten (8) für die Spleissrolle (1) gegen den Anschlag (4) der Spleisseinheit (17) geschoben wird,
wobei das am Materialhalter (2) eingeklemmte Endteil (12) des vorderen Materialstreifenendes (20) aus dem Materialhalter (2) heraus gezogen und mit dem hinteren Materialstreifenende (21) der ersten Spulbandage (16) verbunden wird.

10. Verfahren nach einem der vorhergehenden Ansprüche,
**dadurch gekennzeichnet, dass**
bei Schritt d) ein Niederhalter (6) das hintere Materialstreifenende (20) der ersten Spulbandage (16) in eine Aussparung (18) der Materialführung (5) zurück zieht, wodurch das Endteil (12) des hinteren Materialstreifenendes (20) der ersten Spulbandage (16) in der Nut (13) der Materialführung (5) positioniert wird.

11. Verfahren nach einem der vorhergehenden Ansprüche,
**dadurch gekennzeichnet, dass**
das Anhalten des Aufspulprozesses bei Schritt b) dann erfolgt, wenn im Auswickelbereich der Spule mit der ersten Spulbandage (16) ein Materialende detektiert wird.

12. Verfahren nach einem der vorhergehenden Ansprüche,
**dadurch gekennzeichnet, dass**
eine Vielzahl von Spleisseinheiten (17) eingesetzt werden,
wobei jeder Spleisseinheit eine separate Spule mit einer Spulbande zugeordnet ist, wobei bei Schritt e) die Materialführung (5) mit dem hinteren Materialstreifenende (20) der ersten Spulbandage (16) jeweils vor eine Spleisseinheit (17) mit einem vorderen Materialstreifenende (21) der zweiten Spulbandage (23) verfahren wird.

## Claims

1. Method for the automated joining-together of material strip ends (20, 21) of a winding bandage during the production of vehicle tires, having the following steps:
a) continuously winding up a first winding bandage (16) in order to produce a tyre blank,
b) stopping the winding-up process and fixing the first winding bandage (16) to a material guide (5),
c) cutting the first winding bandage (16) in the rear region of the material guide (5) by way of a cutting device (7),
d) arranging the rear material strip end (20) of the first winding bandage (16) in a groove (13) of the material guide (5),
e) positioning the material guide (5) with the rear material strip end (20) of the first winding bandage (16) below a splicing unit (17),
wherein the front material strip end (21) of a second winding bandage (23) has already been placed in the splicing unit (17),
f) connecting the front material strip end (21) of the second winding bandage (23) to the rear material strip end (20) of the first winding bandage (16),
wherein the front and the rear material strip end (20, 21) lie one over the other in a predefined length region and a splicing roller (1) arranged on the splicing unit (17) is rolled on the material strip ends (24) lying one over the other, and presses these against one another, over the splicing length (25),
wherein the material strip ends (20, 21) lying one over the other are fixedly connected to one another,
g) returning the splicing unit (17) into an initial position,
h) continuing the winding process in order to produce a tyre blank with the second winding bandage (23).

2. Method according to Claim 1,
**characterized in that**
in step f), the splicing roller (1) is guided on a carriage unit with a carriage (8) for the splicing roller (1) and with a guide (9).

3. Method according to one of the preceding claims, **characterized in that**
in step f), the splicing length (25) of the material strip ends (24) lying one over the other is set by way of an adjustable stop (4).

4. Method according to one of the preceding claims, **characterized in that**
the front material strip end (21) of the second winding bandage (23) is clamped in the splicing unit (17) between a clamping unit (10) and a material holder (2).

5. Method according to one of the preceding claims, **characterized in that**
a resilient element (3) is arranged between the material holder (2) and the stop (4),
wherein the resilient element (3) holds the material holder (2) and the stop (4) so as to be spaced apart from one another.

6. Method according to one of the preceding claims, **characterized in that**
the stop (4) is adjustable along the guide (9), whereby the splicing length (25) can be variably set.

7. Method according to one of the preceding claims, **characterized in that**
the splicing length (25) can be variably set up to a length of approximately 100 to 200 mm.

8. Method according to one of the preceding Claims 4-7,
**characterized in that**
in step f), the splicing roller (1) rolls over the front material strip end (21) and is moved against the material holder (2).

9. Method according to one of the preceding Claims 4-8,
**characterized in that**
in step f), the material holder with the carriage (8) for the splicing roller (1) is pushed against the stop (4) of the splicing unit (17),
wherein that end part (12) of the front material strip end (20) which is clamped on the material holder (2) is pulled out of the material holder (2) and is connected to the rear material strip end (21) of the first winding bandage (16).

10. Method according to one of the preceding claims, **characterized in that**
in step d), a holding-down means (6) pulls the rear material strip end (20) of the first winding bandage (16) back into a recess (18) of the material guide (5), whereby the end part (12) of the rear material strip end (20) of the first winding bandage (16) is positioned in the groove (13) of the material guide (5).

11. Method according to one of the preceding claims, **characterized in that**
the stopping of the winding-up process in step b) is performed if a material end is detected in the uncoiling region of the winding with the first winding bandage (16).

12. Method according to one of the preceding claims, **characterized in that**
a multiplicity of splicing units (17) is used, wherein each splicing unit is assigned a separate winding with a winding bandage,
wherein, in step e), the material guide (5) with the rear material strip end (20) of the first winding bandage (16) is moved in each case in front of a splicing unit (17) with a front material strip end (21) of the second winding bandage (23).

## Revendications

1. Procédé pour l'assemblage automatisé d'extrémités de bandes de matériau (20, 21) d'une frette bobinée dans la fabrication de pneus de véhicule, comprenant les étapes suivantes :
a) bobinage continu d'une première frette bobinée (16) pour la fabrication d'un pneu vert,
b) arrêt du processus de bobinage et fixation de la première frette bobinée (16) avec un guide de matériau (5),
c) séparation de la première frette bobinée (16) dans la région arrière du guide de matériau (5) avec un dispositif de coupe (7),
d) agencement de l'extrémité de bande de matériau arrière (20) de la première frette bobinée (16) dans une rainure (13) du guide de matériau (5),
e) positionnement du guide de matériau (5) avec l'extrémité de bande de matériau arrière (20) de la première frette bobinée (16) sous une unité d'épissurage (17),
l'extrémité de bande de matériau avant (21) d'une deuxième frette bobinée (23) étant déjà insérée dans l'unité d'épissurage (17),
f) connexion de l'extrémité de bande de matériau avant (21) de la deuxième frette bobinée (23) avec l'extrémité de bande de matériau arrière (20) de la première frette bobinée (16), les extrémités de bande de matériau avant et arrière (20, 21) étant situées l'une au-dessus de l'autre dans une région longitudinale prédéfinie et un rouleau d'épissurage (1) disposé au niveau de l'unité d'épissurage (17) étant roulé sur la longueur d'épissurage (25) des extrémités de bande de matériau situées l'une au-dessus de l'autre (24) et les pressant l'une contre l'autre,
les extrémités de bande de matériau situées l'une au-dessus de l'autre (20, 21) étant connectées fixement l'une à l'autre,
g) retour de l'unité d'épissurage (17) dans une position de départ,
h) poursuite du processus de bobinage pour fabriquer un pneu vert avec la deuxième frette bobinée (23).

2. Procédé selon la revendication 1,
**caractérisé en ce que**
à l'étape f), le rouleau d'épissurage (1) est guidé sur une unité de chariot avec un chariot (8) pour le rouleau d'épissurage (1) et un guide (9).

3. Procédé selon l'une quelconque des revendications précédentes,
**caractérisé en ce que**
à l'étape f), la longueur d'épissurage (25) des extrémités de bande de matériau superposées (24) est ajustée par le biais d'une butée réglable (4).

4. Procédé selon l'une quelconque des revendications précédentes,
**caractérisé en ce que**
l'extrémité de bande de matériau avant (21) de la deuxième frette bobinée (23) est serrée dans l'unité d'épissurage (17) entre une unité de serrage (10) et un support de matériau (2).

5. Procédé selon l'une quelconque des revendications précédentes,
**caractérisé en ce**
**qu'**entre le support de matériau (2) et la butée (4) de l'unité d'épissurage (17) est disposé un élément à ressort (3),
l'élément à ressort (3) maintenant à distance le support de matériau (2) et la butée (4).

6. Procédé selon l'une quelconque des revendications précédentes,
**caractérisé en ce que**
la butée (4) peut être réglée le long du guide (9), de sorte que la longueur d'épissurage (25) puisse être ajustée de manière variable.

7. Procédé selon l'une quelconque des revendications précédentes,
**caractérisé en ce que**
la longueur d'épissurage (25) peut être ajustée de manière variable jusqu'à une longueur d'environ 100 à 200 mm.

8. Procédé selon l'une quelconque des revendications précédentes 4-7,
**caractérisé en ce**
**qu'**à l'étape f), le rouleau d'épissurage (1) roule sur l'extrémité de bande de matériau avant (21) et est déplacé contre le support de matériau (2).

9. Procédé selon l'une quelconque des revendications 4-8,
**caractérisé en ce**
**qu'**à l'étape f) le support de matériau est déplacé avec le chariot (8) pour le rouleau d'épissurage (1) contre la butée (4) de l'unité d'épissurage (17),
l'extrémité terminale (12) de l'extrémité de bande de matériau avant (20) serrée sur le support de matériau (2) étant tirée hors du support de matériau (2) et étant connectée à l'extrémité de bande de matériau arrière (21) de la première frette bobinée (16).

10. Procédé selon l'une quelconque des revendications précédentes,
**caractérisé en ce**
**qu'**à l'étape d), un serre-flan (6) ramène l'extrémité de bande de matériau arrière (20) de la première frette bobinée (16) dans un évidement (18) du guide de matériau (5), de sorte que la partie d'extrémité (12) de l'extrémité de bande de matériau arrière (20) de la première frette bobinée (16) soit positionnée dans la rainure (13) du guide de matériau (5).

11. Procédé selon l'une quelconque des revendications précédentes,
**caractérisé en ce que**
l'arrêt du processus de bobinage à l'étape b) s'effectue lorsqu'une extrémité de matériau est détectée dans la région de dévidage de la bobine avec la première frette bobinée (16).

12. Procédé selon l'une quelconque des revendications précédentes,
**caractérisé en ce**
**qu'**une pluralité d'unités d'épissurage (17) sont utilisées,
chaque unité d'épissurage étant associée à une bobine séparée avec une frette bobinée,
à l'étape e), le guide de matériau (5) étant déplacé avec l'extrémité de bande de matériau arrière (20) de la première frette bobinée (16) à chaque fois devant une unité d'épissurage (17) avec une extrémité de bande de matériau avant (21) de la deuxième frette bobinée (23).
